# EUROPEAN PATENT APPLICATION

(11) **EP 2 787 475 A2**
(43) Date of publication of application: **08.10.2014**
(21) Application number: 14160158.3
(22) Date of filing: 14.03.2014
(51) Int. Cl.: G06Q 20/38, G07F 7/08

(54) **Dynamically generated security code system for smart, debit and credit cards**

(30) Priority: 14.03.2013 US 201313830341; 06.06.2013 US 201313912160; 30.09.2013 US 201314042650
(71) Applicant: Guillaud, Philippe, Culver City, California 90232 (US)
(72) Inventor: Guillaud, Philippe, Culver City, California 90232 (US)
(74) Representative: Bast, Tim

(57) **Abstract**

This invention provides a dynamically generated security code for smart, debit and credit cards as a way to thwart fraudulent use of these cards in financial transactions. The card internally contains a processor connected to a viewable display powered by a battery where the processor is capable of generating security codes on a periodic basis. The card can generate the security code by encrypting certain data is a way that the card issuer as the same security codes so that when the security code is used in a financial transaction, the card issuer can ascertain whether the transaction is valid and authorized or potentially fraudulent. To prevent unwanted denials of transactions when the security code is changed, a time period window can be created on the card issuer's network that compares the card security code with the current valid security code stored on the card issuer's server as well as the previous security code in case the transaction was processed over a longer period of time than the life of the dynamically generated security code.

## Description

### BACKGROUND OF THE INVENTION

### 1. Claim of Priority.

This application claims priority to U.S. Patent Application No. 13/830,341 filed on March 14, 2013 titled "Dynamically Generated Security Code System For Smart, Debit and Credit Cards" and is incorporated by reference in its entirety.

### 2. Field of the Invention.

The invention concerns the field of enhanced security features for smart, debit and credit cards as used in commerce. Specifically, a dynamically allocated security code is generated by the smart, debit or credit card which when analyzed by a payment processor or card issuing network approves or denies specific financial transaction from occurring thus reducing the risk of fraudulent activity with the card.

### 3. Related Art.

Most of online fraud occurs due to thief of a valid debit or credit card Primary Account Number ("PAN"), expiration date and security code that are stolen from the card holder without their knowledge. Typically, this theft of card data is accomplished when a card holder visits a merchant and an unscrupulous merchant employee captures the card data for later resale while returning the actual card to the card holder. With cameras built into most of today's mobile phones, card information can easily be captured when the card holder passes the card to unscrupulous merchant employees. Once stolen, the card data information is often parked for a short period of time (e.g. several months) so that the card holder cannot determine the location where the card information was stolen. After a suitable period of time has elapsed, the data card information and codes can be used for e-commerce transaction and cardholder may never notice the fraudulent purchases unless close examination is made of the bank/credit card statement.

Another way that card data is stolen is from hackers who manage to penetrate the internal firewalls of merchants, thus stealing card data stored by the merchants. In both scenarios, the card holder is typically not aware that their card information was stolen and sold to a third party such as a criminal organization until fraudulent transactions start appearing on the card holder's monthly statements.

One way for banks and credit card processors to combat credit and debit card fraud is to use security codes. These security codes are known by a variety of types of acronyms. Credit cards typically employ a Card Verification Value ("CVV" or "CVV2"), also known as a Card Security Code ("CSC"), Card Verification Data ("CVD"), Card Verification Value Code ("CVVC"), Card Verification Code ("CVC" or "CVC2"), Verification Code ("V-code" or "V code"), Card Code Verification ("CCV"), or Signature Panel Code ("SPC"). These security codes using different terminology help implement enhanced security features for smart, debit and credit card transactions by providing increased protection for merchants against credit card fraud. While American Express places its security code on the front of the card, most smart, debit and credit cards place their security codes on the back of the card forcing thieves to copy this information as well as a further step to discourage and make it slightly more difficult for thieves to capture the smart, debit and credit card information.

The original purpose of implementing three or four digit security codes was to ensure that card holders had the card in hands when making purchases. With the advent of online shopping, an increasing number of merchants started to store the security codes on their servers to speed up the online transaction process as a way to enhance the shopping convenience of the customer. Unfortunately, capturing this information helps thieves when the merchant's card data is hacked by sophisticated hackers and the smart/debit/credit card information along with the stored security codes are stolen removing the necessity for the thief to have the smart, debit or credit card in their physical possession. Thus, the use of security codes as a way to reduce fraudulent transactions is thwarted by the merchants themselves in their attempt to make online purchases easier for the customer.

Additional limitations exist on the use of debit and credit card security codes. The use of these security codes cannot protect against phishing scams where the card holder is tricked into entering the security code along with other card details via a fraudulent website. The growth in phishing is another reason why the use of security codes has reduced their real-world effectiveness as an anti-fraud device. For merchants who do not use security codes, their transactions are typically subjected to higher card processing costs and fraudulent transactions without security codes are more likely to be resolved in favor of the cardholder thus increasing the costs to the merchants.

Therefore, a need exists for dynamically generating card security codes that periodically change in order to stymie thieves from stealing the card information or rendering stolen data worthless in a short period of time after the theft of the card's security code data. A need also exists for a system a card issuer to support dynamically changing security codes so that financial transactions that take several weeks are not erroneously denied and identified as fraudulent because the card security code has changed during the time delay in processing the financial transaction for the card.

### SUMMARY

This invention provides a dynamically generated security code for smart, debit and credit cards as a way to thwart fraudulent use of these cards in financial transactions. The card internally contains a processor connected to a viewable display powered by a battery where the processor is capable of generating security codes on a periodic basis. The card can generate the security code by encrypting certain data is a way that the card issuer as the same security codes so that when the security code is used in a financial transaction, the card issuer can ascertain whether the transaction is valid and authorized or potentially fraudulent.

An alternative embodiment for the dynamic generation of security codes, the card processor may call from a memory storage area on the card a security code from a list of encrypted security codes. The security code is then validated using the same methodology as a security code that was generated by firmware running on the processor.

Dynamically generated security codes typically have a life of a couple of weeks before the security code is changed. To prevent unwanted denials of transactions when the security code is changed, a time period window can be created on the card issuer's network that compares the card security code with the current valid security code stored on the card issuer's server as well as the previous security code in case the transaction was processed over a longer period of time than the life of the dynamically generated security code.

This may be accomplished by creating a mid-point sliding time window whose size is the length of the time allotted for the life of the security code. When the security code arrives at the card issuer's servers, the sliding window is created with the mid-point of the sliding time period window the date of arrival of the card's security code. The sliding time period window may encompass more than one time period representing the life of the card's security code. Therefore, the card issuer's network can analyze all the valid security codes to ascertain whether the correct card security code was assigned at the start of the financial transaction, but was delayed for some reason. This sliding time period window allows for the validation of these slowly processed financial transactions without unduly increasing the risk of fraudulent activity.

Other systems, methods, features, and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### DETAILED DESCRIPTION OF THE DRAWINGS

The components in the figures are not necessarily to scale, emphasis being placed instead upon illustrating the principles of the invention. In the figures, like reference numerals designate corresponding parts throughout the different views.

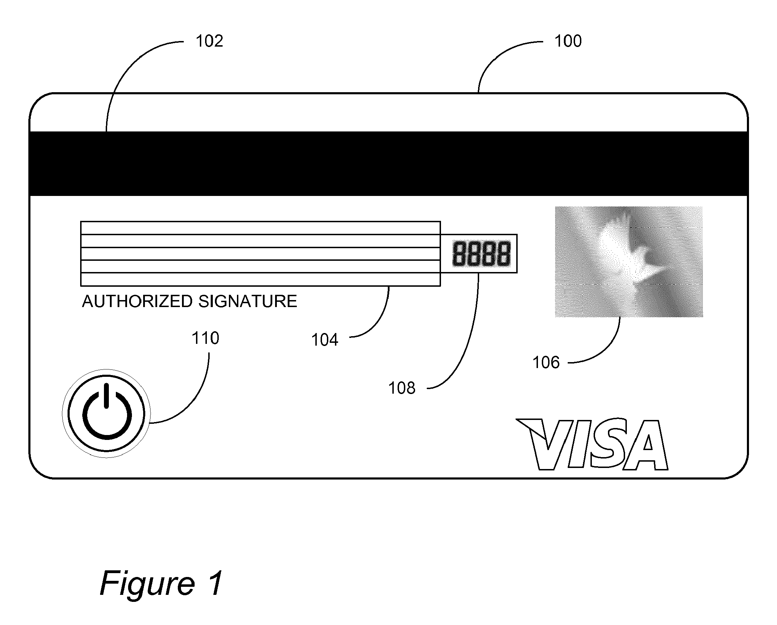

Figure 1 is a side view of a smart, debit or credit card illustrating a flexible display on the rear side of the card.
Figure 2 is a block diagram of the hardware in a smart, debit or credit card for enabling the display of a dynamically generated security code.
Figure 3 is a block diagram of the data flow when a debit or credit card employing a dynamically generated security code is used to conduct a transaction.
Figure 4 illustrates an alternative embodiment using an event based solution where each new security code is generated based on the iteration of an internal counter within the card.
Figure 5 is a block diagram of a display code sequence enabling the use of a dynamically generated security code.
Figure 6 is a flow chart illustrating the process for card holders who input a PIN to generate a security code.

### DETAILED DESCRIPTION

This invention provides a dynamic allocation of a security code for a smart card, debit card or credit card. In an effort to thwart smart, debit and credit card fraud, this invent provides for the generation of dynamically allocated card security codes calculated by various means. These dynamically allocated security codes may be generated by: (1) a random number that is encoded by encrypting the bank card number, also known as the Primary Account Number ("PAN"), expiration date and service code with encryption keys typically called Card Verification Keys ("CVK") known only to the card issuing bank or smart card provider; (2) a list of encrypted numbers assigned to a specific card and stored in the card's memory; or (3) periodically wirelessly transmitted from a card issuer's network and stored in a memory area on the card.

As a way to overcome the shortcomings of a static, printed security code on the front or back of a smart, debit or credit card 100, this invention, when implemented dynamically generates a new and different security code periodically on a card. On the outside, card 100 looks very similar to today's smart, debit and credit cards in that it has a PAN number, expiration date, name of an individual or company embossed on the front of the card. The card 100 may also have a logo of an issuing bank or organization backing the card. On the rear of the card 100, a magnetic stripe 102 containing digital data of the card holder and other relevant data may be stored in memory. Also located on the rear of card 100 may be a signature stripe 104 and a hologram 106 to assist merchants in detecting fraudulent cards.

For the smart, debit or credit card 100 to dynamically generate security codes, a display 108 may be incorporated into the card's structure. For optimum results, this display 108 may be flexible so that it will handle the stresses generated by card use. Typically, the display 108 may show three or four digits, but a card issuer may adopt a larger code display capable of showing more than four digits. A touch sensitive control button 110 may be incorporated into the card 100 so that whenever the touch sensitive control button 110 is selected the security code is shown on the display 108. This would preserve battery life as the display could be off until the card holder needs to generate the security code. Also, the card may generate a new security code without any action taken on behalf of the card holder based on the passage of a predetermined amount of time (e.g. a week, two weeks, a month, etc.) set by the card issuer.

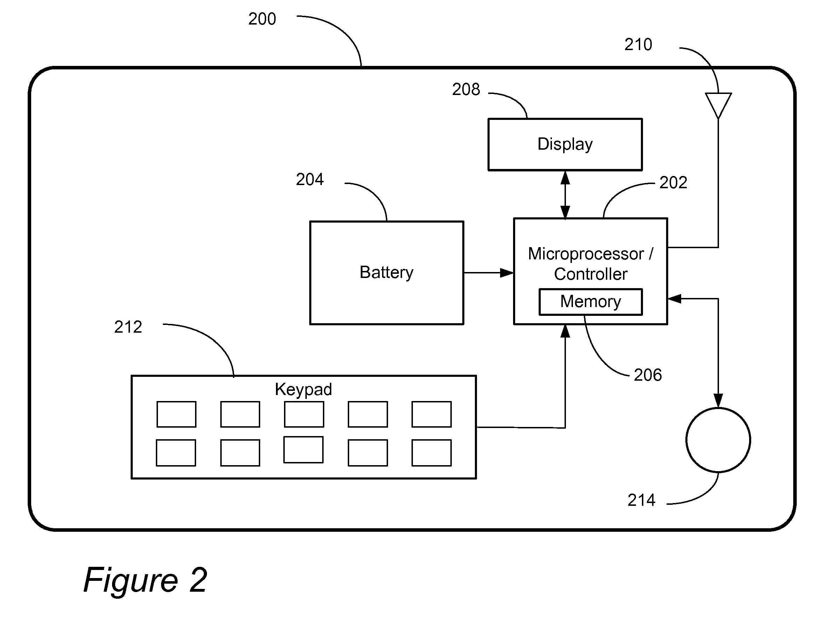

Figure 2 is a block diagram of the hardware that may be used to implement the generation of dynamic security codes in a smart, debit or credit card 200. The card 200 may comprise a built in microprocessor/controller 202, battery 204, memory storage area 206 which may be located within the microprocessor or external of the microprocessor/controller 202, and a flexible display 208. The flexable display 208 may be constructed using an e-paper type display so that the flexible display 208 is always on and a security code is always visible to the card holder when examined.

Additional hardware features may include an in internal Radio Frequency ("RF") antenna 210, a touch keypad 212, an internal clock (not shown) and a touch sensitive control button 214. Typically, smart cards, debit cards and credit cards are manufactured by one vendor and sent to another vendor for imprinting the PAN number, card holder name and expiration date of the card 200. The uploading of the security codes maybe be accomplished by the card issuer or the vendor charged with imprinting the PAN number, card holder name and expiration date with a contact or contactless smart card chip or through the use of a built in RF antenna 210. The RF antenna 210 may utilized as methodology to increase the productivity of the vendor generating the cards for the cardholder. The RF antenna 2010 may be used to download updated firmware for the processor 202; download updated algorithms for calculating the security codes; resynchronize the card with the card issuer's network or download an updated list of security codes sent by the card issuer's network into the memory 206. These downloads may occur when the card is made and assigned to the cardholder. These downloads may also be accomplished after the card is in the possession of the card holder.

Many card issuer networks are developing standards for the financial industry. EMV stands for the Europay, Master Card and Visa global standard for the interoperation of Integrated Circuit Cards ("IC Cards") and IC Card point of sale terminals and Automated Teller Machines ("ATMs") for authenticating smart, debit and credit card transactions. With the adoption of IC Cars in Europe and the planned roll out of IC Cards in the United States and other countries in the coming years, the dynamic generation of security codes may be easily implemented. When the card holder inserts their card into a IC Card point of sale terminal or inserts their IC Card into an ATM, the card with the dynamically generated security code could automatically generate a new security code after the IC Card completes the transaction. Such an implementation could produce a time and event combination where the card dynamically generates a new security code after a predetermined time period has elapsed and where the card dynamically generates a new security code after a specific event occurs such as when the IC Card is inserted into an IC Card point of sale terminal or ATM.

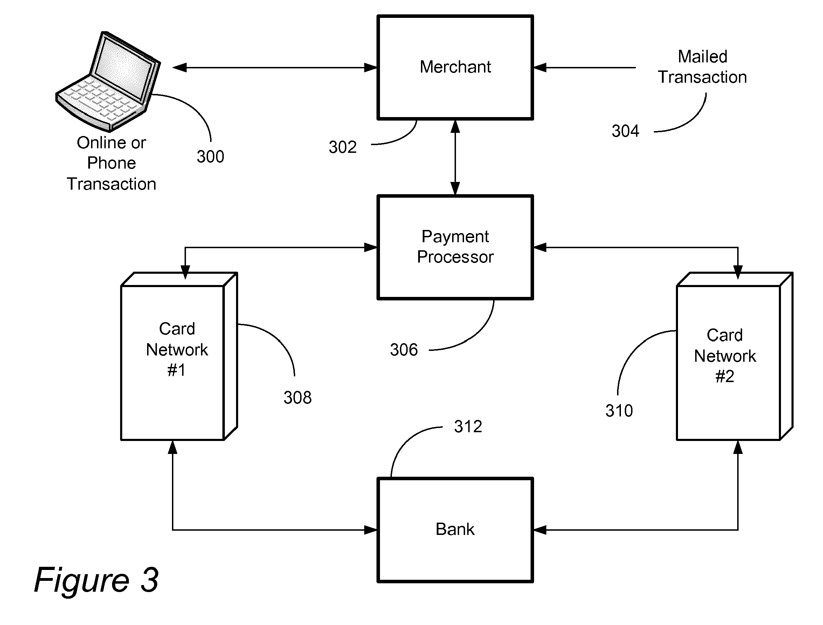

Protecting the security codes inside the card 200 is important for the overall card system security's interface with the transaction processing network as shown in Figure 3. Regardless of whether the security codes are calculated by the card 200 or generated when the card 200 is produced and stored into memory pulled out from a list, the security codes should be encrypted to prevent thieves from accessing the internal working hardware and deciphering the securities codes and algorithm. When the security code is calculated, a cryptography key is at risk and should be protected. Also, a listing of keys that are stored in the card's memory should also be encrypted. Once the security code has been generated or recalled from the card's memory, it is displayed on the card 200 and it is no longer a secret anymore. However, the security code that is generated will have a limited life and will only be valid for a predetermined time period.

The addition of a touch sensitive control button 214 generates a signal within the card 200 indicating that the card holder desires a security code and the card generates and shows the security code in the display 208. The use of such a touch sensitive control button 214 would extend the battery life of the card 200 and would only energize or light up the display 208 specifically when the user seeks to use the card 200. The implementation of a key pad 212 could provide additional security requiring the card holder to insert a PIN on the key pad 212 before the security code is shown on the display 208. An additional security level could be added with the use of a key pad 212 by allowing the secure code algorithm to generate a correct security code when the correct PIN is input on the key pad 212 and the generation of an incorrect security code if an incorrect PIN is input on the key pad 212.

Another security enhancing feature could be the addition of a One Time Password ("OTP") that would be delivered to the user via a text message sent to the card holder's mobile device for access to online banking. The OTP would not necessarily replace the user's password, but could be required as a third component (login name, password and security code). Since the card only has one display of typically 3 or 4 digits, the OTP could work whenever the user requires an OTP to be generated. When requested, a user would press on the touch sensitive control button 214 of the card 200 and a new OTP would be displayed on the display 208 for a limited time (e.g. 30 seconds or less). Once the OTP code was viewed for the predetermined time period, the security code would replace permanently the OTP on the display 208. Pressing the touch sensitive control button 214 a second time would generate another OTP and so on. Each OTP would be valid for a limited time or based on a counter.

Another embodiment may include the implementation of two distinct functions on the same card (e.g. distinct crypto keys for different functions). In the case of a two feature card such as the implementation of an OTP and a dynamically generated security code, two different crypto algorithms may be implemented or one algorithm for the OTP calculation and a list of security codes for the dynamically generated security code implemented with two separate crypto keys for each function. Therefore, it would be possible for a bank or card issuer to split the security responsibilities between two distinct departments such as online banking and payment processing.

As a way to ensure that a card holder does not mix up the OTP and dynamically generated security code, a solution could be implemented where the OTP utilizes a four digit code and the dynamically generated security code is shown with three digits. Every time a card holder pressed the touch sensitive control button 214, the card holder would see the four digits OTP displayed for predetermined amount of time, e.g. 30 seconds followed by the display the 3 digits dynamically generated security code.

The dynamic generation of security codes may be calculated or called from a list of security codes stored in the memory location 206 on the card 200. An alternative embodiment may allow for the transmission of a unique security code to a card holder's mobile device that is then input into the card via the key pad 212. These solutions present several implementation issues such as (1) how long the security code should be valid; (2) how the card will be authenticated by the card issuer or payment processor with the dynamically generated or recall of the security code from a list of codes stored in the card's memory; and (3) compliance with a variety of card use transaction scenarios such as online, mail order, multi suppliers' orders, fax processed orders, un-synchronized transactions and etc.

Figure 3 is a block diagram of a card of the data flow when a debit or credit card employing a dynamically generated security code is used to conduct a transaction. When an online or phone transaction 300 is attempted by a card holder, the card information, expiration date, cardholder's name and security code is transmitted to the merchant or organization processing a payment 302. In other transaction scenarios, a card holder may process a transaction that requires a significant amount of time. Such time consuming transactions include those transactions conducted by fax or mail 304. Once the merchant 302 receives the card's data, the card number and zip code are typically verified with the payment processor 306. In some instances the payment processor may be asked to perform the security code authorization such that the payment processor has the capability of authenticating the validity of the card security code.

The payment processor 306 then compares the card holder to a list of banned cards and if a match is not made the payment processor 306 passes the card data to the card networks such as Visa, Master Card, American Express, Discover, Europay Maestro, etc. 308 and 310. This card data is then routed to the appropriate network. For example, Visa cards are routed to the Visa network 308 and the Master Cards care routed to the Master Card network 310. Likewise, American Express cards and Europay cards are routed to their respective networks. These card networks 308 and 310 provide security code authorization, zip code authorization and debit and credit the banks. Please note smaller banks may push zip code authorization to the card networks or even the payment processor 306. These networks 308 and 310 perform the security code authorization points that are capable of authenticating the validity of the security code as well as interface with various banks 312 to ensure the seamless flow of money and goods when card holders seek to complete transactions.

The same system applies to the implementation of dynamically generated security codes. Here, the bank may issue a card to a customer where the bank sends card holder information to a card issuer who generates a working smart, debit or credit card to the bank's customer. The security code information may be based on information supplied by the payment processor 306 or the card issuer. The security code validation data is supplied to the payment processor 306 so that transactions can be verified and authenticated by the payment processor 306 or the card issuer's network 308 and 310.

A complication that arises in the implementation of a dynamically generated security code is how long the security code should remain valid. If the security code window of validity is limited to several minutes, online and mail order phone transactions have a high probability of success while faxed transactions or transactions accomplished by mail will nearly always fail. Thus, there needs to be a balance between decreasing the potential for fraud activity and optimizing the types of transactions so that the overwhelming majority of card holder transactions are approved. This time window is best optimized for a validity window of one to two weeks. The determination of the optimum time window is typically selected by the card issuer based on their statistical data for card usage and the level of fraud activity.

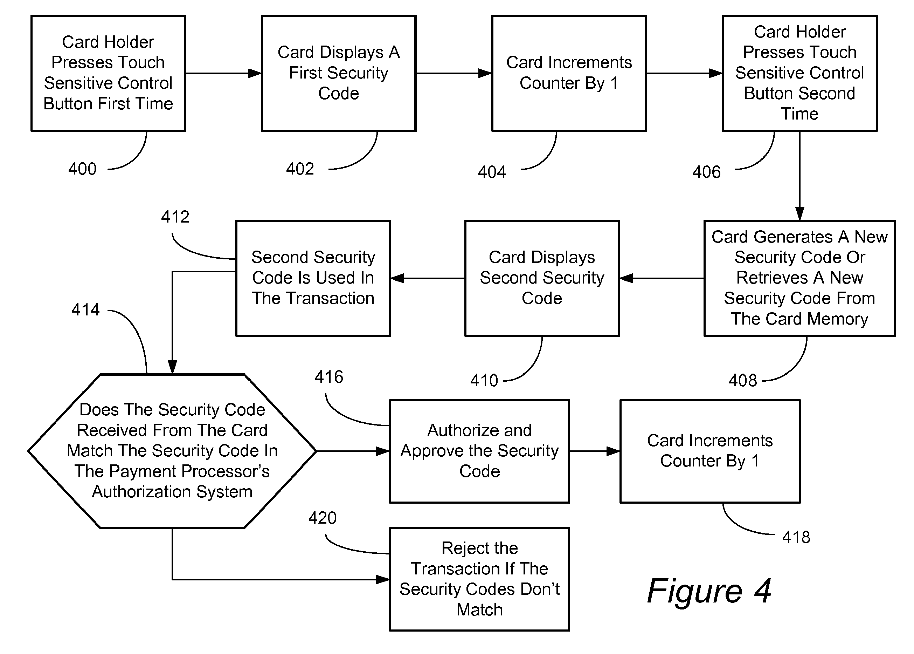

Figure 4 illustrates an alternative embodiment using an event based solution where each new security code is generated based on the iteration of an internal counter within the card. In such an event based implementation, the new security code may be calculated or recalled from a list stored in memory. Each time the user seeks to use the card, the card holder will press the touch sensitive control button 400 located on the card. When the touch sensitive control button the card pressed the card generates a first security code 402. A built in counter within the card increments a starting value by one 404. When the card holder presses the touch sensitive control button a second time 406 a new security code is generated 408 and displayed on the card 410. The second security code is then used in the next transaction 412. The card processor then compares the transmitted security code with the next security code stored in their authorization system 414. If the security codes match, the transaction is authorized and approved 416. The card processor's authorization system increments its counter (418) and waits for the next transaction. If the security codes do not match, the transaction is rejected 420.

A problem occurs however when a card holder keeps pressing on the touch sensitive control button or when the card activates by itself based on pressures exerted on a wallet and multiple codes are generated without being submitted as a part of a transaction to the payment processor. When a legitimate transaction is attempted by the card holder a de-synchronization issue will arise between the counter inside the card and the counter located on the backend processing side at the payment processor. This issue may be counteracted by the addition of a large window of possibilities, but when a three digit security codes is implemented the window may become sufficiently large that a person engaged in card fraud may guess a security code based on the average probability thus rending the security features meaningless. Also, if a card were to fall into the hands of a child, repeated pressing of the touch sensitive control button could quickly cause the counter to become de-synchronized. In these scenarios, the card holder's frustration is likely to rise and the card issuers cost rise as cards become frequently replaced well before their intended expiration.

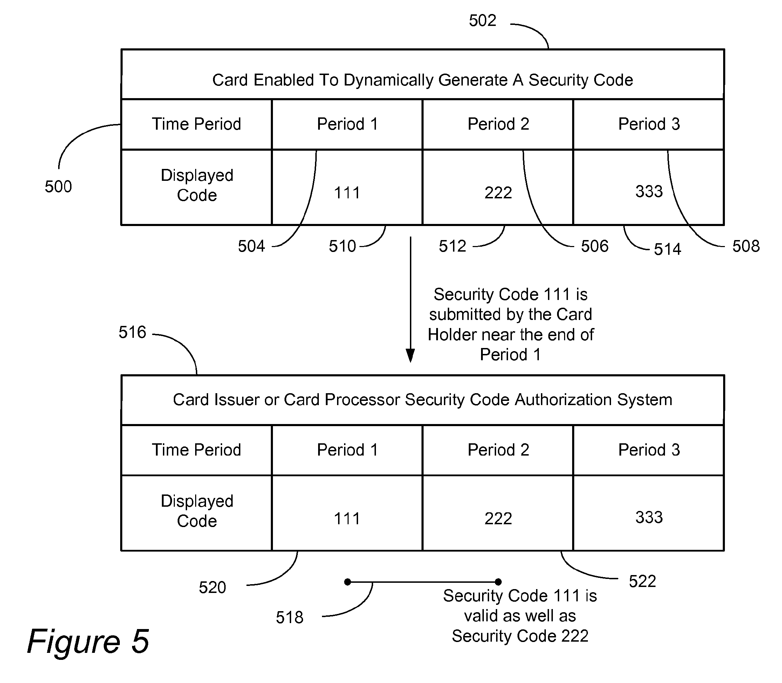

Figure 5 is a block diagram of a simple display code sequence enabling the use of a dynamically generated security code. Using a time based implementation methodology where the security code changes by itself based on a periodic clock event, eliminates the de-synchronization possibility based on inadvertent repeated selection of the touch sensitive control button. When the card is initialized by the card issuer, the card and the backend processing system controlled by the payment processor are synchronized. As added protection, a limited time drift window may be implemented to further reduce potential problems ensuring that the security codes are not out of synchronization. Also, the addition of a time drift solution could eliminate the need for a card holder to select the touch sensitive control button 214 on the card, since the security code could change itself automatically based on input from the internal clock. The only limitation on this solution would be the battery life with the display always on.

A time based methodology for the generation of security codes typically requires the card to have an internal clock or wireless access to a time keeping system so that the generation of security codes are synchronized with the card issuer or payment processor. As an alternative, the card could connect to the payment processor or a third party who maintains a clock for synchronization timing solutions. With a sufficiently long period of time window to deal with transactions that require a longer period of time, e.g. faxed or mail transactions, one security code could be used for multiple transactions that may occur during this time period window.

For the time window, a solution is to have a card capable of generating a new security code that is valid during a periodic time window that is sufficiently large enough to overcome delays that may exist in transactions that require more time, e.g. fax and mail transactions. A typical time window could be as short as one week or as long as one month. In other words, a specific security code will be valid for a fixed period of time and the same security code will be displayed on the card. When the time window expires the card will dynamically generate a new code or recall from memory the next security code from a list of security codes stored on the card. As an alternative embodiment for storing a list of security codes on the card, this list may be stored in the cloud on the card issuer's servers or card processor's servers and called by wireless commands automatically sent from the card to these servers without the card holder knowing that these communication messages are being sent and received by the card. However, a major limitation for such a wireless interface with the cloud is for card holders who may be attempting to conduct a transaction in a remote location where wireless connections are not possible thus when it is time for the card holder to conduct a transaction, no current security code is stored on the card.

Referring to Figure 5, whenever a request for a security code is submitted by the card holder by pressing the touch sensitive control button 214 to the processor, a calculation is performed or the security code is recalled from a security code list stored in the memory on the card 200 based on the time period window 500. The card that is enabled to dynamically generate a security code 502 tracks the various time period windows Period 1 (504), Period 2 (506) and Period 3 (508). The security codes that will be generated for each of the time period windows Period 1 (404), Period 2 (406) and Period 3 (508) are 111 (510), 222 (512) and 333 (514) respectively.

The security code 111 (510) is generated by the card 502 and sent to the card issuer or payment processor authorization system 516. The card issuer or payment processor card authorization system 516 compares the card's security code 111 (510) to the security code authorized by the card issuer or payment processor's computer systems 516. If the security codes match, the transaction proceeds accordingly and payment is made. Otherwise, payment authorization is declined.

In order to prevent valid codes from being rejected by the card issuer or the payment processor authorization system 516, when a transaction is attempted by a card holder that is close to or just past the time period window for the security code's validity, the card issuer or payment processor authorization system 516 may consider the security code 111 (510) entered by the card holder 502 was sent during the middle of the sliding time period window 518.

Also, the sliding time period window 518 may allow the authorization of multiple values 111 (520) and 222 (522) allowing for various types of transactions by the card holder ranging from fast e-commerce transaction to transactions taking days or a couple of weeks such as those conducted by mail. For example, if a time period window is considered valid for fifteen (15) days and a security code is submitted on the fourteenth (14^{th}) day, the card issuer or payment processor authorization system 416 may match the submitted security code 111 (510) against a first security code 111 (520) that is seven (7) days old and second security code 222 (522) that is seven (7) days in the future. Therefore, this security code matching methodology allows time period window flexibility for slower transactions such as those attempted by fax or mail without increasing otherwise valid transactions from being declined.

A likely scenario is that the time periods between the dynamic generation of security codes will vary between differing card issuer networks. Also, the sliding time period window will also likely differ between the various card issuer networks.

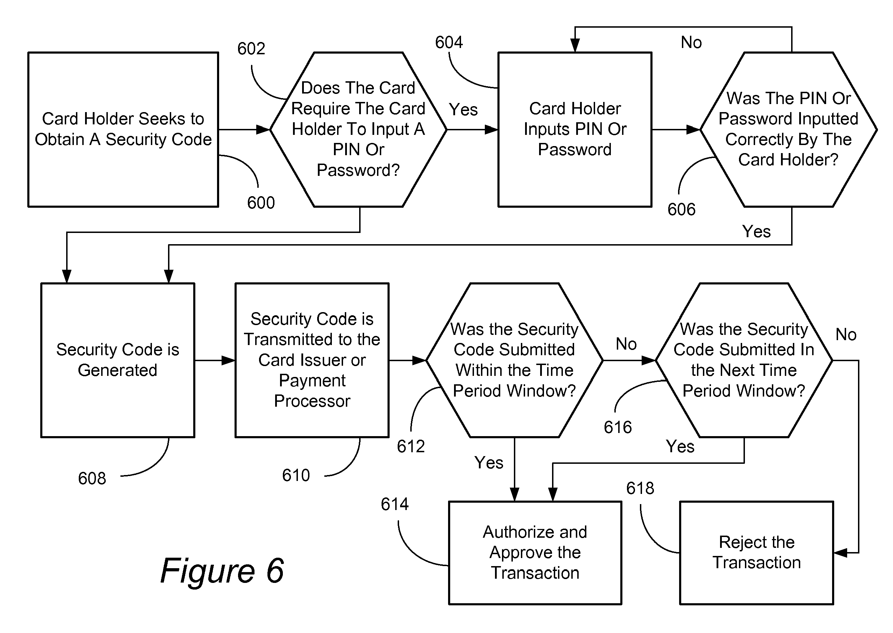

Figure 6 is a flow chart illustrating the process for card holders who may have to input a PIN or password to generate a security code. When the card holder seeks to obtain a security code 600, the card may or may not require the input of a PIN or password 602. If the card requires the card holder to input a PIN or password 604, the card tests with whether the correct PIN or password was input 606. If the PIN or password was not correctly input, the card holder inputs the PIN or password again 604. If the PIN or password was correctly input, the security code is generated by the card 608. The PIN or password may be generated by the card issuer's network and transmitted to a card holder's mobile device as a text or email message.

The security code is then transmitted as one of the required values (e.g., card number, card holder name and expiration date) to the card processor 610. The security code is then analyzed by the card processor and compared with the security code for the time period window 612. If the card security code matches security code in the card processor's authentication system, then the transaction is authorized and approved 614. If the security code that was not submitted in the current time period window 612 the card processor determines whether the security code submitted was in the next time period window 616. If the security codes match, then the transaction is authorized and approved 614. If the security codes do not match, then the transaction is rejected 618.

While various embodiments of the invention have been described, it will be apparent to those of ordinary skill in the art that many more embodiments and implementations are possible that are within the scope of this invention.

## Claims

1. A card processing network operating with a dynamically generated security code, comprising:
a plurality of cards where:
each card (200) has a processor (202) connected to a viewable display (208) powered by a battery (204) where the processor (202) is capable of accessing a memory storage area (206); and
each card (200) has a generator capable of periodically producing a
security code for use in a transaction;
a security code authorization point (306) capable of authenticating the validity of the security code.

2. The card processing network operating with the dynamically generated security code of Claim 1, where the security code authorization point (306) is the payment processor (306).

3. The card processing network operating with the dynamically generated security code of Claim 1, where the security code authorization point is the card network.

4. The card processing network operating with the dynamically generated security code of Claim 1, where the plurality of cards further comprise key pads (212) capable of accepting a PIN code.

5. The card processing network operating with the dynamically generated security code of Claim 4, where the PIN code is transmitted by the card network to a mobile device (300) controlled by a card holder.

6. The card processing network operating with the dynamically generated security code of Claim 1, further comprises a key pad (212) capable of accepting a password.

7. The card processing network operating with the dynamically generated security code of Claim 6, where the password is transmitted by the card network to a mobile device (300) controlled by a card holder.

8. The card capable of dynamically generating security codes of Claim 1, where the card security code is called from a list of encrypted security codes stored in the memory storage area (206).

9. The card capable of dynamically generating security codes of Claim 8, where a subsequent card security code is called from an encrypted list of security codes stored in the memory storage area (206) by using a counter that increments each time the card security code is called by the card holder.
